# EUROPÄISCHE PATENTSCHRIFT

(11) **EP 2 877 382 B1**
(45) Veröffentlichungstag und Bekanntmachung des Hinweises auf die Patenterteilung: **01.02.2017**
(21) Anmeldenummer: 13742614.4
(22) Anmeldetag: 24.07.2013
(51) Int. Cl.: B61B 13/04, B65G 35/06

(54) **TRANSPORTVORRICHTUNG ZUM UMLAUFENDEN TRANSPORTIEREN VON OBJEKTEN**
TRANSPORT DEVICE FOR TRANSPORTING OBJECTS IN A CIRCULATING MANNER
DISPOSITIF DE TRANSPORT CIRCULAIRE D'OBJETS

(30) Priorität: 27.07.2012 DE 202012007288 U
(43) Veröffentlichungstag der Anmeldung: 03.06.2015
(73) Patentinhaber: Machines Highest Mechatronic GmbH, 6343 Erl (AT)
(72) Erfinder: ZOCCO, Carmelo, 21047 Saronno (VA) (IT)
(74) Vertreter: Baroni, Matteo
(86) Internationale Anmeldenummer: PCT/EP2013/065658
(87) Internationale Veröffentlichungsnummer: WO 2014/016356

(56) Entgegenhaltungen:
- WO-A1-97/09258
- DE-A1-102008 032 151
- US-A- 3 246 609
- US-A- 4 800 818
- US-A- 4 947 978

## Beschreibung

Die vorliegende Erfindung betrifft eine Transportvorrichtung zum umlaufenden Transportieren von Objekten entlang einer umlaufenden Transportbahn, insbesondere für eine Druckmaschine gemäss dem Oberbegriff des Anspruchs 1.

Ein solche Transportvorrichtung ist aus der DE 10 2008 032 151 A1 bekannt.

Eine gattungsgemässe Transportvorrichtung weist mindestens einen Transportschlitten, an welchem ein Objekt befestigbar ist, und mindestens zwei an der Transportbahn angeordnete Bearbeitungseinrichtungen zum Bearbeiten eines Objekts auf, wobei jeder Transportschlitten einen Einzelantrieb zum Bewegen des jeweiligen Transportschlittens entlang der Transportbahn aufweist.

Solche Transportvorrichtungen finden in zahlreichen Industriezweigen Verwendung, beispielsweise in der Verarbeitung, Fertigung oder Montage von Objekten und insbesondere in der Oberflächenbehandlung, wie zum Beispiel dem Bedrucken von Objekten. Die Bearbeitungseinrichtungen an der Transportbahn sind entsprechend diesen Aufgaben gestaltet.

Zum Antreiben der Transportschlitten sind verschiedene Techniken bekannt. So kann ein zentraler Antrieb für alle Transportschlitten vorhanden sein, der beispielsweise einen entlang der Transportbahn verlaufenden Riemen bewegt, mit dem die Transportschlitten gezogen werden. Hierbei ist allerdings die Flexibilität eingeschränkt, Transportschlitten unabhängig voneinander zu bewegen oder die Transportbahn zu erweitern. Eine solche Transportvorrichtung ist in DE 27 60 217 C2 beschrieben.

Zudem ist es bekannt, alternativ Linearmotoren einzusetzen, bei denen eine Führungsstange entlang der Transportbahn den Stator des Linearantriebs bildet. Durch die spezielle Gestaltung an der Führungsbahn ist allerdings auch hier die Flexibilität gering, beispielsweise bezüglich einer Änderung der umlaufenden Transportbahn.

Bei einer gattungsgemässen Transportvorrichtung, wie sie in US 3,246,609 beschrieben ist, weist jeder Transportschlitten einen eigenen Einzelantrieb auf. Durch Einzelantriebe können die Transportschlitten zwar flexibel und unabhängig voneinander angesteuert werden. Jedoch sind bei US 3,246,609 zum Stoppen der Einzelantriebe spezielle hierauf abgestimmte Stoppmechanismen an den Bearbeitungseinrichtungen notwendig. Erst hierdurch wird eine ausreichend präzise Positionierung des Transportschlittens an einer Bearbeitungseinrichtung erreicht. Dadurch werden dem flexiblen Einsatz verschiedener Transportschlitten Grenzen gesetzt.

Als eine Aufgabe der Erfindung kann erachtet werden, eine Transportvorrichtung bereitzustellen, die mit kostengünstigen Mitteln eine grosse Flexibilität ermöglicht. Diese Aufgabe wird durch eine Transportvorrichtung mit den Merkmalen des Anspruchs 1 gelöst.

Vorteilhafte Varianten der erfindungsgemässen Transportvorrichtung sind Gegenstand der abhängigen Ansprüche und werden ausserdem in der folgenden Beschreibung, insbesondere im Zusammenhang mit der Figur, beschrieben.

Bei der Transportvorrichtung der vorgenannten Art ist erfindungsgemäss vorgesehen, dass jeder Einzelantrieb einen Schrittmotor zum Bewegen des jeweiligen Transportschlittens entlang der Transportbahn und zum Positionieren des Transportschlittens an einer der Bearbeitungseinrichtungen aufweist und dass eine zentrale Steuereinheit vorhanden ist, die dazu eingerichtet ist, zum Bewegen des Transportschlittens und zum Positionieren des Transportschlittens an einer der Bearbeitungseinrichtungen eine digitale Positionieranweisung für die Schrittmotoren auszugeben.

Weil jeder Transportschlitten im Stande ist, auf Grundlage der Positionieranweisung eigenständig und unabhängig von anderen Transportschlitten eine bestimmte Position einzunehmen, kann von einer eigenen Intelligenz eines jeden Einzelantriebs gesprochen werden.

Als ein Grundgedanke der Erfindung kann erachtet werden, solche Einzelantriebe einzusetzen, die nicht nur zum Verfahren der Transportschlitten zwischen den Bearbeitungseinrichtungen, also über vergleichsweise weite Strecken, geeignet sind. Vielmehr soll als ein präzises Positionieren der Transportschlitten an einer Bearbeitungseinrichtung mit dem Antrieb möglich sein. Hierzu werden erfindungsgemäss Schrittmotoren eingesetzt, die gegenüber herkömmlichen Elektromotoren oder Servomotoren eine höhere Präzision bereitstellen.

Dies bietet eine höhere Flexibilität gegenüber herkömmlichen Transportvorrichtungen, bei denen entweder aufwändige Stoppmechanismen zum Stoppen eines Einzelantriebs vor einer Bearbeitungseinrichtung oder ein zweiter Motor erforderlich ist, der nicht zum Bewegen von einer Bearbeitungseinrichtung zum nächsten, sondern zum Positionieren an einer Bearbeitungseinrichtung eingesetzt wird. Durch den Einsatz und die spezielle Ansteuerung der Schrittmotoren gemäss der Erfindung ist hingegen ein solcher zweiter Motor, der den Transportschlitten oder eine Objekthalterung von diesem in dieselbe Richtung wie der Schrittmotor bewegt, nicht zwingend erforderlich. Es kann jedoch auch eine Einstelleinheit am Transportschlitten vorgesehen sein, die eine Feinausrichtung des Objekts in einer horizontalen Ebene erlaubt.

Gemäss einem weiteren Kerngedanken der Erfindung ist eine zentrale Steuereinheit nicht bloss zum Bewegen der Transportschlitten eingerichtet, sondern auch zum Positionieren der Transportschlitten an den Bearbeitungseinrichtungen. Dies wird erreicht, indem digitale Positionieranweisungen für die Schrittmotoren ausgegeben werden, womit die höhere Präzision von Schrittmotoren gegenüber herkömmlichen Motoren vorteilhaft genutzt werden kann.

Die umlaufende Transportbahn kann beispielsweise mit einer oder mehrerer parallel zueinander verlaufender Schienen gebildet sein. Die Transportschlitten können ein oder mehrere Antriebsräder aufweisen, die von dem Einzelantrieb angetrieben werden und eine Schiene der Transportbahn berühren können. Der Einzelantrieb mit dem Schrittmotor kann gelenkig mit einem Hauptkörper des Transportschlittens, an dem das Objekt gehalten wird, verbunden sein. Hierdurch ist der Transportschlitten auch für Fahrten an gebogenen Transportbahnen besonders geeignet.

Ein Transportschlitten kann ausserdem Führungsräder oder -rollen aufweisen, mit denen der Transportschlitten entlang Schienen der Transportbahn geführt wird. Die Führungsräder oder -rollen können an einer Laufwageneinheit angebracht sein, die gelenkig mit dem Hauptkörper des Transportschlittens verbunden ist. Um Schlupf zu vermeiden, können zudem Mittel zum Einstellen eines Drucks des Antriebsrads gegen die Führungsbahn vorhanden sein.

Die zu bearbeitenden Objekte können prinzipiell beliebiger Art sein und beispielsweise Rohlinge, Werkstücke, Textilien und Kleidungsstücke umfassen. Bei einer bevorzugten Ausführungsform der erfindungsgemässen Transportvorrichtung ist mindestens eine der Bearbeitungseinrichtungen eine Druckeinrichtung zum Bedrucken eines Objekts, das an einem der Transportschlitten befestigt ist.

Bei der Erfindung wird ein Schrittmotor zum Verfahrendes gesamten Transportschlittens verwendet. Es wird mit dem Schrittmotor also nicht eine Objekthalterung auf dem Transportschlitten relativ zum Transportschlitten bewegt.

Damit eine prinzipiell beliebige Anzahl an Transportschlitten durch die zentrale Steuereinheit angesteuert werden kann, ist erfindungsgemäß vorgesehen, dass jeder Transportschlitten eine Identifikationsnummer aufweist, dass die zentrale Steuereinheit dazu eingerichtet ist, Positionieranweisungen zusammen mit Identifikationsnummern auszugeben und dass jeder Transportschlitten Antriebssteuermittel aufweist, die dazu eingerichtet sind, bei einer empfangenen Positionieranweisung mit einer Identifikationsnummer, die mit der Identifikationsnummer des Transportschlittens übereinstimmt, den Schrittmotor um eine Schrittzahl anzusteuern, die der Positionieranweisung entspricht.

Dabei kann die zentrale Steuereinheit dazu eingerichtet sein, Positionieranweisungen als Schrittzahlbefehle zu übermitteln. Alternativ oder zusätzlich können die Antriebssteuermittel dazu eingerichtet sein, abhängig von einer Positionieranweisung und abhängig von einer aktuellen Position des jeweiligen Transportschlittens eine Schrittzahl zu ermitteln und den jeweiligen Schrittmotor mit einem Schrittzahlbefehl entsprechend der ermittelten Schrittzahl anzusteuern. Während herkömmliche Steuereinheiten oftmals bloss einen Startzeitpunkt und einen Endzeitpunkt für ein Aktivieren eines Einzelantriebs ausgeben, kann durch einen Schrittzahlbefehl der zentralen Steuereinheit gemäss der Erfindung eine Positionieranweisung mit einer deutlich höheren Genauigkeit übermittelt werden.

Wenn die Antriebssteuermittel des jeweiligen Transportschlittens selbst einen Schrittzahlbefehl aus der Positionieranweisung der zentralen Steuereinheit ableiten, kann die Positionieranweisung unabhängig von den konkret eingesetzten Schrittmotoren ausgegeben werden. Auch ist es möglich, dass verschiedene Transportschlitten Schrittmotoren mit unterschiedlicher Schrittlänge verwenden. Dadurch kann vorteilhafterweise eine besonders hohe Flexibilität erreicht werden. Es ist bevorzugt, dass zum Positionieren eines Transportschlittens an einer der Bearbeitungseinrichtungen eine minimale Schrittlänge, um die der jeweilige Transportschlitten verfahrbar ist, kleiner als 4 cm, bevorzugt kleiner als 1 cm, ist. Durch die minimale Schrittlänge wird die Genauigkeit bestimmt, mit welcher der Transportschlitten positionierbar ist.

Bei einer bevorzugten Ausführungsvariante der erfindungsgemässen Transportvorrichtung ist zur Kommunikation zwischen der zentralen Steuereinheit und den Antriebssteuermitteln der jeweiligen Schrittmotoren eine Schleifkontaktschiene vorgesehen, die entlang der Transportbahn verläuft. Unabhängig von der Position eines Transportschlittens an der Transportbahn kann so eine Kommunikation mit der zentralen Steuereinheit sichergestellt werden. Prinzipiell ist zwar auch eine Funkübertragung möglich, aufgrund der zahlreichen verschiedenen Funkübertragungsstandards kann jedoch durch die Schleifkontaktschiene eine höhere Flexibilität erreicht werden, indem unterschiedlich gebildete Antriebssteuermittel zur Kommunikation mit der zentralen Steuereinheit in der Lage sind.

Die Schleifkontaktschiene dient bevorzugt auch der Führung eines Transportschlittens entlang der Transportbahn. Hierzu weist ein Transportschlitten zusätzlich ein Führungsrad oder eine Führungsrolle auf, welche die Schleifkontaktschiene kontaktiert.

Zweckmässigerweise kann zur Energieversorgung der Transportschlitten eine Energieschiene vorgesehen sein, die eine elektrische Spannung von einer entfernten Energiequelle bereitstellt und entlang der Transportbahn verläuft. Bevorzugt sind die Schleifkontaktschiene und die Energieschiene durch eine gemeinsame Schiene gebildet. Hierdurch können die elektrischen Kontakte eines Transportschlittens zum Kontaktieren der Schleifkontakt- und der Energieschiene nah beieinander angeordnet sein. Weil diese elektrischen Kontakte in der Regel sensibel sind, kann durch diese nahe Anordnung bereits eine einzige Schutzverkleidung zum Schützen der elektrischen Kontakte der Transportschlitten genügen. Insbesondere zu diesem Zweck sind die Schleifkontaktschiene und die Energieschiene bevorzugt durch parallel zueinander verlaufende elektrische Leitungen einer gemeinsamen Schiene gebildet.

Um die durch die Schrittmotoren ermöglichte präzise Positionierung der Transportschlitten weiter zu verbessern, ist bei einer Ausführungsvariante vorgesehen, dass der oder die Transportschlitten jeweils Positionsüberwachungsmittel zum Feststellen einer Position des jeweiligen Transportschlittens relativ zu einer der Bearbeitungseinrichtungen und/oder zu der Transportbahn aufweisen, und dass die Antriebssteuermittel dazu eingerichtet sind, den Schrittzahlbefehl abhängig von der festgestellten Position zu korrigieren. Hierdurch kann Schlupf, ein Blockieren eines Rads des Transportschlittens oder eine inkorrekte Positionierung erfasst und korrigiert werden. Solche Positionsüberwachungsmittel können auch als Weg-Encoder oder Encoder bezeichnet werden. Durch die Korrektur kann der Schrittzahlbefehl auf eine bestimmte Schrittzahl festgesetzt werden oder um einen bestimmten Betrag verändert werden, damit eine entfernte Bearbeitungseinrichtung präzise erreicht wird. Die Antriebssteuermittel können dazu eingerichtet sein, den Schrittzahlbefehl ohne Stoppen des Transportschlittens zu korrigieren. Gegenüber herkömmlichen Positionsüberwachungssteuerungen kann so ein unerwünschter Stillstand vermieden werden.

Bei einer weiteren Variante der erfindungsgemässen Transportvorrichtung weisen der oder die Transportschlitten jeweils Kommunikationsmittel auf, die dazu eingerichtet sind, über die Schleifkontaktschiene die mit Positionsüberwachungsmitteln festgestellte Position des jeweiligen Transportschlittens zu übermitteln. Die zentrale Steuereinheit kann hier dazu eingerichtet sein, eine Positionieranweisung an einen Transportschlitten abhängig von einer übermittelten Position eines anderen Transportschlittens zu erzeugen. Hierdurch wird in besonders einfacher Weise eine Steuerung bereitgestellt, die einen Zusammenstoss zweier Transportschlitten vermeiden kann. Es kann auch vorgesehen sein, dass die zentrale Steuereinheit auf Grundlage der mit den Positionsüberwachungsmitteln festgestellten Position eine korrigierte Positionieranweisung ausgibt, die von der festgestellten Position und einer Sollposition des Transportschlittens abhängt.

Weitere Merkmale und Vorteile der Erfindung werden nachstehend im Zusammenhang mit der beigefügten Figur beschrieben. Hierbei zeigt:

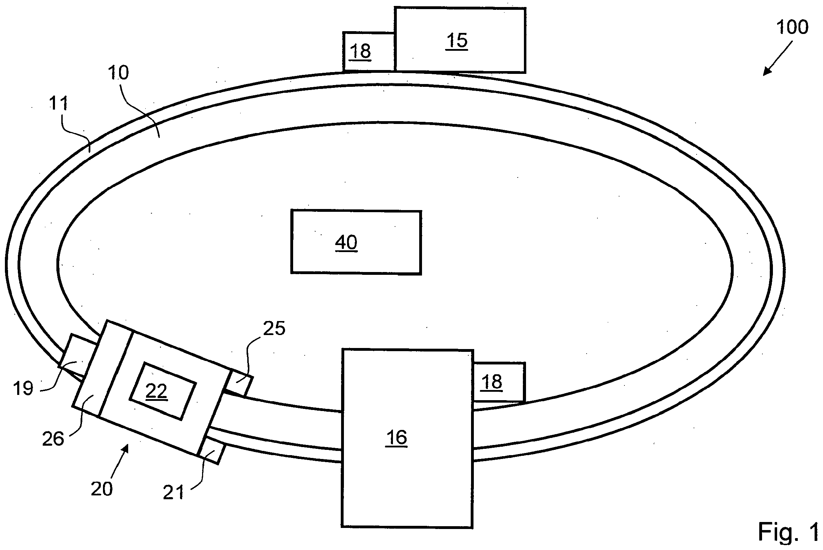

Fig. 1: eine schematische Darstellung eines Ausführungsbeispiels einer erfindungsgemässen Transportvorrichtung.

In Fig. 1 ist schematisch ein bevorzugtes Ausführungsbeispiel einer erfindungsgemässen Transportvorrichtung 100 gezeigt. Als wesentliche Komponenten umfasst die Transportvorrichtung 100 eine umlaufende, das heisst in sich geschlossene Transportbahn 10 , mindestens einen Transportschlitten 20 , Bearbeitungseinrichtungen 15 und 16 sowie eine zentrale Steuereinheit 40 zum Steuern des Transportschlittens 20. Eine beliebige Anzahl weiterer Transportschlitten und Bearbeitungseinrichtungen kann zusätzlich vorhanden sein.

Mit den Bearbeitungseinrichtungen 15 und 16 kann ein Objekt 22 , das von dem Transportschlitten 20 getragen wird, bearbeitet, beispielsweise bedruckt, geschnitten oder verpackt werden.

Erfindungsgemäss weist jeder Transportschlitten 20 einen Einzelantrieb 25 mit einem Schrittmotor 25 auf. Hierdurch können verschiedene Transportschlitten flexibel und präzise positioniert werden. Durch die hohe Positioniergenauigkeit von Schrittmotoren wird es ermöglicht, dass die zentrale Steuereinheit 40 mit einer digitalen Positionieranweisung nicht nur ein Bewegen von Transportschlitten zwischen den beiden Bearbeitungseinrichtungen 15 und 16 anordnen kann, sondern auch ein Positionieren eines Transportschlittens an der Bearbeitungseinrichtung 15 oder 16 bewirken kann. Die Genauigkeit des Positionierens kann dabei durch eine minimale Schrittlänge bestimmt sein, um welche der Schrittmotor 25 den zugehörigen Transportschlitten 20 verfahren kann. Eine vergleichbare Genauigkeit ist mit herkömmlichen Elektromotoren nur mit unverhältnismässig grossem Mehraufwand möglich.

Über eine nicht dargestellte Einstelleinheit am Transportschlitten 20 kann zudem eine Feinausrichtung des Objekts 22 mit einer Auflösung erfolgen, die besser als die minimale Schrittlänge des Schrittmotors 25 ist.

Zur Ansteuerung des Schrittmotors 25 weist der Transportschlitten 20 Antriebssteuermittel 26 auf, die den Schrittmotor 25 um eine zu fahrende Schrittzahl ansteuern.

Diese Schrittzahl beruht auf einer Positionieranweisung der zentralen Steuereinheit 40. Zur Kommunikation zwischen der zentralen Steuereinheit 40 und dem Transportschlitten 20 ist entlang der Transportbahn 10 eine Schleifkontaktschiene 11 vorhanden. Diese kann ausser elektrischen Leitungen zur Datenkommunikation auch elektrische Leitungen zur Energieversorgung des Schrittmotors 25 eines Transportschlittens 20 umfassen.

Der Transportschlitten 20 weist zudem Kommunikationsmittel 21 auf. Zum Empfangen einer Positionieranweisung berühren diese die Schleifkontaktschiene 11 . Bevorzugt sind sie auch zum Senden von Daten an die zentrale Steuereinheit 40 über die Schleifkontaktschiene 11 eingerichtet. Bei den von den Kommunikationsmitteln 21 gesendeten Daten kann es sich um eine aktuelle Position des Transportschlittens 20 handeln. Die zentrale Steuereinheit 40 kann sodann abhängig von der gesendeten Position eine Positionieranweisung an diesen Transportschlitten 20 korrigieren und/oder eine Positionieranweisung an einen anderen Transportschlitten abgeben. Dadurch kann beispielsweise ein Zusammenstoss von zwei Transportschlitten ausgeschlossen werden. Alternativ oder zusätzlich können die von den Kommunikationsmitteln 21 gesendeten Daten auch eine Identifikationsnummer des Transportschlittens 20 umfassen. Mit der Identifikationsnummer kann die zentrale Steuereinheit 40 verschiedene Transportschlitten getrennt voneinander ansteuern.

Die zentrale Steuereinheit 40 kann auch dazu eingerichtet sein, eine fehlerhafte Vergabe von Identifikationsnummern zu erkennen. Haben zwei Transportschlitten dieselbe Identifikationsnummer und senden diese zusammen mit ihrer aktuellen Position an die zentrale Steuereinheit 40, so kann diese abhängig von den mitgesandten Positionsangaben eine Plausibilitätsüberprüfung durchführen, ob sich ein und derselbe Transportschlitten 20 an diesen beiden Positionen aufgehalten haben kann oder ob es sich um zwei verschiedene Transportschlitten mit derselben Identifikationsnummer handeln muss.

Um die Positioniergenauigkeit zu erhöhen, können Positionsmarken 18 und Positionsüberwachungsmittel 19 vorhanden sein. Dabei können der Transportschlitten 20 mit Positionsüberwachungsmitteln 19 ausgestattet sein und Positionsmarker 18 an den Bearbeitungseinrichtungen 15 und 16 angeordnet sein. Alternativ kann jeder Transportschlitten 20 mit einem Positionsmarker 18 versehen sein und an den Bearbeitungsstationen 15 und 16 befinden sich Positionsüberwachungsmittel 19 . Eine Anordnung der Positionsüberwachungsmittel 19 am Transportschlitten 20 ist bevorzugt, wenn der Transportschlitten 20 selbst über Antriebssteuermittel 26 verfügt, die einen Schrittzahlbefehl abhängig von der ermittelten Position festlegen oder korrigieren können. Zudem wird hierdurch die Flexibilität insofern erhöht, als Transportschlitten unterschiedlicher Abmessungen eingesetzt werden können, die eine zu fahrende Schrittzahl abhängig von einem detektierten Positionsmarker 18 selbst ermitteln.

Eine Anordnung der Positionsüberwachungsmittel 19 an den Bearbeitungseinrichtungen 15 und 16 kann andererseits bevorzugt sein, wenn die zentrale Steuereinheit 40 dazu eingerichtet ist, eine Positionieranweisung an einen Transportschlitten 20 abhängig von dessen ermittelter Position abzugeben. Zudem sind hierdurch die Kosten eines einzelnen Transportschlittens 20 geringer, was bei Verwendung einer grossen Anzahl an Transportschlitten zu einer Kostenersparnis führt.

In beiden Fällen wird mit Hilfe der Positionsüberwachungsmittel 19 eine Schrittzahl für den Schrittmotor 25 festgelegt, durch welche gegenüber herkömmlichen Elektromotoren oder Servomotoren eine genauere Positionierung möglich ist. Diesem Vorteil kommt besondere Bedeutung zu, wenn bei einer Detektion eines Positionsmarkers 18 ein Transportschlitten 20 noch um eine bestimmte Strecke weiter fahren soll. Diese Strecke kann durch die erfindungsgemäss eingesetzten Schrittmotoren mit besonders hoher Präzision angefahren werden.

Auch unabhängig von den Positionsüberwachungsmitteln 19 kann durch den Schrittmotor 25 eine gegenüber dem Stand der Technik präzisere Positionierung an den Bearbeitungseinrichtungen 15 und 16 erreicht werden, indem die zentrale Steuereinheit 40 nicht bloss eine Anweisung zum Verfahren des Transportschlittens 20 zwischen den Bearbeitungseinrichtungen 15 und 16 aussendet. Vielmehr sendet sie eine digitale Positionieranweisung aus, mit der auch ein exaktes Positionieren des Transportschlittens 20 an einer der Bearbeitungsstationen 15, 16 erfolgt. Dadurch kann bei Erweiterungen der Transportbahn 10 oder Hinzufügungen weiterer Bearbeitungseinrichtungen in einfacher Weise ein exaktes Positionieren der Transportschlitten 20 erfolgen, wodurch die erfindungsgemässe Transportvorrichtung 100 eine besonders hohe Flexibilität bietet.

## Patentansprüche

1. Transportvorrichtung zum umlaufenden Transportieren von Objekten (22) entlang einer umlaufenden Transportbahn (10), insbesondere für eine Druckmaschine, mit
- mindestens einem Transportschlitten (20), an welchem ein Objekt (22) befestigbar ist, und
- mindestens zwei entlang der Transportbahn (10) angeordneten Bearbeitungseinrichtungen (15 , 16) zum Bearbeiten eines Objekts (22),
wobei jeder Transportschlitten (20) einen Einzelantrieb (25) zum Bewegen des jeweiligen Transportschlittens (20) entlang der Transportbahn (10) aufweist,
wobei jeder Einzelantrieb (25) einen Schrittmotor (25) zum Bewegen des jeweiligen Transportschlittens (20) entlang der Transportbahn (10) und zum Positionieren des Transportschlittens (20) an einer der Bearbeitungseinrichtungen (15, 16) aufweist und dass eine zentrale Steuereinheit (40) vorhanden ist, die dazu eingerichtet ist, zum Bewegen des Transportschlittens (20) und zum Positionieren des Transportschlittens (20) an einer der Bearbeitungseinrichtungen (15, 16) eine digitale Positionieranweisung für die Schrittmotoren (25) auszugeben,
**dadurch gekennzeichnet,**
**dass** jeder Transportschlitten (20) eine Identifikationsnummer aufweist,
**dass** die zentrale Steuereinheit (40) dazu eingerichtet ist, Positionieranweisungen zusammen mit Identifikationsnummern auszugeben, und
**dass** jeder Transportschlitten (20) Antriebssteuermittel (26) aufweist, die dazu eingerichtet sind, bei einer empfangenen Positionieranweisung mit einer Identifikationsnummer, die mit der Identifikationsnummer des Transportschlittens (20) übereinstimmt, den Schrittmotor (25) um eine Schrittzahl anzusteuern, die der Positionieranweisung entspricht.

2. Transportvorrichtung nach Anspruch 1,
**dadurch gekennzeichnet,**
**dass** die zentrale Steuereinheit (40) eine Positionieranweisung als einen Schrittzahlbefehl übermittelt und/oder
**dass** die Antriebssteuermittel (26) dazu eingerichtet sind, abhängig von einer Positionieranweisung und abhängig von einer aktuellen Position des jeweiligen Transportschlittens (20) eine Schrittzahl zu ermitteln und den jeweiligen Schrittmotor (25) mit einem Schrittzahlbefehl entsprechend der ermittelten Schrittzahl anzusteuern.

3. Transportvorrichtung nach einem der Ansprüche 1 bis 2, **dadurch gekennzeichnet, dass** zum Positionieren des Transportschlittens (20) an einer der Bearbeitungseinrichtungen (15, 16) eine minimale Schrittlänge, um die der Transportschlitten (20) verfahrbar ist, kleiner als 4 cm, bevorzugt kleiner als 1 cm, ist.

4. Transportvorrichtung nach einem der Ansprüche 1 bis 3, **dadurch gekennzeichnet, dass** zur Kommunikation zwischen der zentralen Steuereinheit (40) und den Antriebssteuermitteln (26) der jeweiligen Schrittmotoren (25) eine Schleifkontaktschiene (11) vorgesehen ist, die entlang der Transportbahn (10) verläuft.

5. Transportvorrichtung nach Anspruch 4,
**dadurch gekennzeichnet,**
**dass** zur Energieversorgung von Transportschlitten (20) eine Energieschiene (11) vorgesehen ist, die eine elektrische Spannung von einer entfernten Energiequelle bereitstellt und entlang der Transportbahn (10) verläuft, und
**dass** die Schleifkontaktschiene (11) und die Energieschiene (11) durch parallel zueinander verlaufende elektrische Leitungen einer gemeinsamen Schiene (11) gebildet sind.

6. Transportvorrichtung nach einem der Ansprüche 1 bis 5,
**dadurch gekennzeichnet,**
**dass** der oder die Transportschlitten (20) jeweils Positionsüberwachungsmittel (19) zum Feststellen einer Position des jeweiligen Transportschlittens (20) relativ zu einer der Bearbeitungseinrichtungen (15, 16) und/oder zu der Transportbahn (10) aufweisen, und dass die Antriebssteuermittel (26) dazu eingerichtet sind, den Schrittzahlbefehl abhängig von der festgestellten Position zu korrigieren.

7. Transportvorrichtung nach einem der Ansprüche 4 oder 5,
**dadurch gekennzeichnet,**
**dass** der oder die Transportschlitten (20) jeweils Kommunikationsmittel (21) aufweisen, die dazu eingerichtet sind, über die Schleifkontaktschiene (11) die mit Positionsüberwachungsmitteln (19) festgestellte Position des jeweiligen Transportschlittens (20) zu übermitteln und
**dass** die zentrale Steuereinheit (40) dazu eingerichtet ist, eine Positionieranweisung an einen Transportschlitten (20) abhängig von einer übermittelten Position eines anderen Transportschlittens (20) zu erzeugen.

8. Transportvorrichtung nach einem der Ansprüche 1 bis 7, **dadurch gekennzeichnet, dass** mindestens eine der Bearbeitungseinrichtungen (15, 16) eine Druckeinrichtung zum Bedrucken eines Objekts (20) ist, das an einem der Transportschlitten (20) befestigt ist.

## Claims

1. Transport apparatus for circumferentially transporting objects (22) along a circumferential transport lane (10), in particular, for a printing machine, having
- at least one transport slide (20), to which an object (22) is mountable, and
- at least two processing units (15, 16) for processing an object, which are arranged along the transport lane (10), wherein each transport slide (20) comprises an individual drive (25) for moving the respective transport slide (20) along the transport lane (10), **characterized in that** each individual drive (25) comprises a stepper motor (25) for moving the respective transport slide (20) along the transport lane (10) and for positioning the transport slide (20) at one of the processing units (15, 16), and that a central control unit (40) is present that is configured, for moving the transport slide (20) and for positioning the transport slide (20) at one of the processing units (15, 16), to output a digital positioning instruction for the stepper motors (25) and, **characterized in that** each transport slide (20) comprises an identification number, that the central control unit (40) is configured to output positioning instructions together with identification numbers, and that each transport slide (20) comprises drive control means (26) that are configured to control the stepper motor (25), when a positioning instruction with an identification number is received that matches the identification number of the transport slide (20), by a step number that corresponds to the positioning instruction.

2. The transport apparatus according to claim 1 **characterized in that** the central control unit (40) transmits a positioning instruction as a step number command, and/or that drive control means (26) are configured to determine a step number in dependence of a positioning instruction and in dependence of a current position of the respective transport slide (20) and to control the respective stepper motor (25) by means of a step number command corresponding to the determined step number.

3. The transport apparatus according to one of the claims 1 to 2, **characterized in that** for positioning a transport slide (20) at one of the processing units (15, 16), a minimal step length, by which the transport slide (20) can be moved, is smaller than 4 cm, preferably smaller than 1 cm.

4. The transport apparatus according to one of the claims 1 to 3, **characterized in that** a sliding contact track, which runs along the transport lane (10), is provided for communication between the central control unit (40) and the drive control means (26) of the respective stepper motors (25).

5. Transport apparatus according to one of the claims 1 to 4, **characterized in that** an energy track (11) can be provided for supplying energy to transport slides (20), which supplies an electrical potential of a remote energy source and runs along the transport lane, and that the sliding contact track (11) and the energy track are formed by electrical lines of a common track (11) running in parallel to each other.

6. The transport apparatus according to one of the claims 1 to 5, **characterized in that** the one or the multiple transport slides (20) comprise respective position monitoring means (19) for determining a position of the respective transport slide (20) with regard to one of the processing units (15, 16) and/or to the transport lane (10), and that the drive control means (26) are configured to correct the step number command in dependence of the determined position.

7. The transport apparatus according to one of the claims 1 to 6, **characterized in that** the one or the multiple transport slides (20) comprise respective communication means (21) that are configured to transmit the position of the respective transport slide (20) determined using the position monitoring means (19) via the sliding contact track (11), and that the central control unit (40) is configured to generate a positioning instruction to a transport slide (20) in dependence of a transmitted position of another transport slide (20).

8. The transport apparatus according to one of the claims 1 to 7, **characterized in that** at least one of the processing units (15, 16) is a printing unit for printing on an object (20) that is fixed to one of the transport slides (20).

## Revendications

1. Dispositif de transport destiné au transport circulatoire d'objets (22) le long d'une bande de transport (10) circulatoire, en particulier pour une presse à imprimer, avec :
- au moins un chariot de transport (20) auquel un objet (22) peut être fixé ; et
- au moins deux mécanismes de traitement (15, 16), disposés le long de la bande de transport (10) en vue du traitement d'un objet (22),
dans lequel chaque chariot de transport (20) présente un entraînement individuel (25) destiné au déplacement du chariot de transport (20) respectif le long de la bande de transport (10) ;
dans lequel chaque entraînement individuel (25) présente un moteur pas à pas (25) destiné au déplacement du chariot de transport (20) respectif le long de la bande de transport (10) et destiné au positionnement du chariot de transport (20) au niveau de l'un des mécanismes de traitement (15, 16) ; et
dans lequel une unité de commande (40) centrale est présente, laquelle est conçue pour émettre une instruction de positionnement numérique pour les moteurs pas à pas (25) en vue du déplacement du chariot de transport (20) et du positionnement du chariot de transport (20) au niveau de l'un des mécanismes de traitement (15, 16),
**caractérisé en ce que**
chaque chariot de transport (20) présente un numéro d'identification ;
l'unité de commande (40) centrale est conçue pour émettre des instructions de positionnement en même temps que des numéros d'identification ; et
chaque chariot de transport (20) présente des moyens de commande de pilotage (26), lesquels sont conçus pour commander au moteur pas à pas (25) de réaliser un nombre de pas correspondant à l'instruction de positionnement, quand une instruction de positionnement est reçue avec un numéro d'identification qui est en concordance avec le numéro d'identification du chariot de transport (20).

2. Dispositif de transport selon la revendication 1,
**caractérisé en ce que**
l'unité de commande (40) centrale transmet une instruction de positionnement sous la forme d'un ordre de nombres de pas ; et/ou
les moyens de commande de pilotage (26) sont conçus pour déterminer un nombre de pas en fonction d'une instruction de positionnement et en fonction d'une position actualisée du chariot de transport (20) respectif, ainsi que pour piloter le moteur pas à pas (25) respectif avec un ordre de nombres de pas qui correspond au nombre de pas déterminé.

3. Dispositif de transport selon l'une des revendications 1 à 2,
**caractérisé en ce que**
une longueur de pas minimale, de laquelle le chariot de transport (20) peut être déplacé pour le positionnement du chariot de transport (20) au niveau de l'un des mécanismes de traitement (15, 16), est inférieure à 4 cm, de préférence inférieure à 1 cm.

4. Dispositif de transport selon l'une des revendications 1 à 3,
**caractérisé en ce que**
un rail à contact glissant (11) est prévu, lequel est installé le long de la bande de transport (10) et lequel est destiné à la communication entre l'unité de commande (40) centrale et les moyens de commande de pilotage (26) des moteurs pas à pas (25) respectifs.

5. Dispositif de transport selon la revendication 4,
**caractérisé en ce que**
un rail d'alimentation énergétique (11) est prévu en vue de l'alimentation en énergie des chariots de transport (20), lequel fournit une tension électrique provenant d'une source d'énergie distante et qui est installé le long de la bande de transport (10) ; et
le rail à contact glissant (11) et le rail d'alimentation énergétique (11) sont formés par des lignes électriques d'un rail (11) commun, lesquelles sont acheminées parallèlement l'une par rapport à l'autre.

6. Dispositif de transport selon l'une des revendications 1 à 5,
**caractérisé en ce que**
le ou les chariots de transport (20) présentent respectivement des moyens de surveillance du positionnement (19) en vue de déterminer une position du chariot de transport (20) respectif par rapport à l'un des mécanismes de traitement (15, 16) et/ou par rapport à la bande de transport (10) ; et
les moyens de commande de pilotage (26) sont conçus pour corriger l'ordre de nombres de pas en fonction de la position ainsi déterminée.

7. Dispositif de transport selon l'une des revendications 4 ou 5,
**caractérisé en ce que**
le ou les chariots de transport (20) présentent respectivement des moyens de communication (21) qui sont conçus pour transmettre, par l'intermédiaire du rail à contact glissant (11), la position du chariot de transport (20) respectif, déterminée à l'aide des moyens de surveillance du positionnement (19) ; et
l'unité de commande (40) centrale est conçue pour générer une instruction de positionnement au niveau d'un chariot de transport (20) en fonction d'une position transmise d'un autre chariot de transport (20).

8. Dispositif de transport selon l'une des revendications 1 à 7,
**caractérisé en ce que**
au moins l'un des mécanismes de traitement (15, 16) est un mécanisme d'impression destiné à l'impression d'un objet (20) qui est fixé à l'un des chariots de transport (20).
